# EUROPÄISCHE PATENTANMELDUNG

(11) **EP 2 009 324 A2**
(43) Veröffentlichungstag der Anmeldung: **31.12.2008**
(21) Anmeldenummer: 08017111.9
(22) Anmeldetag: 05.08.2006
(51) Int. Cl.: F16H 45/02, F16H 61/688, F16H 61/58, F16H 61/14

(54) **Vorrichtung zur Drehmomentübertragung für ein Schaltgetriebe mit zwei Eingängen und Verfahren dafür**

(30) Priorität: 02.09.2005 US 714019 P
(62) Teilanmeldung aus: 06775811.0
(71) Anmelder: LuK Lamellen und Kupplungsbau Beteiligungs KG, 77815 Bühl (DE)
(72) Erfinder: Hemphill, Jeffrey, 44321 Copley Ohio (US); Bailey, George, 78114 Floresville TX (US); Brees, William, 44691 Wooster Okio (US); Lindemann, Patrick, 44691 Wooster (US); Maucher, Edmund, 44840 jeromesville (US); Shamie, Christopher, 44281 Wadsworth OH (US)

(57) **Zusammenfassung**

Die Erfindung umfasst im weitesten Sinne einen Drehmomentwandler (102) mit einer Pumpenkupplung (118), die funktionell so angeordnet ist, dass sie ein am Drehmomentwandler ankommendes Eingangsdrehmoment zu einer Pumpe (122) überträgt, und mit einer Drehmomentwandlerkupplung (120), die funktionell so angeordnet ist, dass sie das Eingangsdrehmoment zu einer Abtriebswelle (128) des Drehmomentwandlers überträgt. Die Pumpenkupplung ist so angeordnet, dass das Eingangsdrehmoment weiterhin zur Pumpe übertragen wird, während das Eingangsdrehmoment mit der Welle verbunden wird. Der Drehmomentwandler beinhaltet auch mindestens ein Schwingungsdämpfungsmittel (106). Das Dämpfungsmittel ist funktionell mit dem Eingangsdrehmoment verbunden und so im Drehmomentwandler angeordnet, dass das Eingangsdrehmoment durch das mindestens eine Schwingungsdämpfungsmittel übertragen wird, wenn dieses mit der Pumpe gekuppelt ist. Die vorliegende Erfindung umfasst im weitesten Sinne auch eine Drehmomentübertragungsvorrichtung, die einen Drehmomentwandler (505), eine erste Antriebswelle (502) für ein Schaltgetriebe mit zwei Eingängen (502,504) und ein Mittel (521) zum Kuppeln des Drehmomentwandlers mit der Antriebswelle umfasst.

## Beschreibung

### GEBIET DER ERFINDUNG

Die Erfindung betrifft Verbesserungen an einer Vorrichtung zur Kraftübertragung zwischen einer rotierenden Antriebseinheit (zum Beispiel einem Motor eines Kraftfahrzeugs) und einer angetriebenen rotierenden Einheit (zum Beispiel einem Schaltgetriebe im Kraftfahrzeug). Insbesondere betrifft die Erfindung eine Kupplungsbaugruppe in einem Mehrfunktions-Drehmomentwandler zum Einkuppeln eines Drehmoments während des Leerlaufs, während der Drehmomentwandlung und im Blockiermodus. Die Kupplungsbaugruppe bewirkt auch die Steuerung der Trägheitskräfte von Pumpen und Turbinen. Die Erfindung betrifft auch einen Drehmomentwandler zur Verwendung in Zusammenhang mit dem Schaltgetriebe mit zwei Eingängen.

### HINTERGRUND DER EREFINDUNG

Bekanntlich werden eine Zweimassenkonfiguration und eine Pumpenkupplung verwendet, wenn die Pumpe in einem Mehrfunktions-Drehmomentwandler vom Motor getrennt werden soll, während sich das Fahrzeug im Leerlauf befindet. Leider kann die Leistung solcher Drehmomentwandler unter verschiedenen Betriebszuständen und Fahrzeugbetriebsbedingungen unbefriedigend sein.

Ein Power-Shift-Getriebe (Lastschalt- und Wechselgetriebe), zum Beispiel das Parallelschaltgetriebe, beinhaltet ungeradzahlige und geradzahlige Zahnräder und eine Doppelkupplung. Das Drehmoment kann ohne Unterbrechung von einer ersten Kupplung und einer zweiten Kupplung übertragen werden, die jeweils mit den ungeradzahligen und geradzahligen Zahnrädern verbunden sind. Als erste und zweite Kupplung werden bei dem parallelen Schaltgetriebe gegenwärtig entweder Mehrscheiben-Nasskupplungen oder - Trockenkupplungen verwendet, um das Fahrzeug anzufahren und zwischen den Gängen zu schalten. Die Kupplungen sind im Glockengehäuse funktionell entweder ineinander angeordnet oder nebeneinander ausgerichtet, sodass das Drehmoment auf die beiden konzentrischen Antriebswellen übertragen wird.

Ein Problem bei Mehrscheiben-Nasskupplungen und -Trockenkupplungen besteht darin, dass relativ große Kupplungen benötigt werden, um das Anfahren und das Anfahren am Berg zu bewältigen. Darüber hinaus erfordern Nasskupplungen ein leistungsfähiges Kühlsystem. Außerdem müssen die Anfahreigenschaften oft korrigiert werden und hängen von Veränderungen der Kupplung und der Kupplungsflüssigkeit im Laufe der Zeit und von der Temperatur ab.

Demzufolge wird ein Mittel zur Leistungssteigerung von Mehrfunktions-Drehmomentwandlern unter verschiedenen Betriebszuständen und Fahrzeugbetriebsbedingungen benötigt. Ferner wird ein Kupplungssystem des parallelen Schaltgetriebes benötigt, das funktionell innerhalb des Gehäuses eines Drehmomentwandlers angeordnet ist, damit das für die Betriebszustände Kriechgang, Anfahren, Anfahren am Berg und Abwürgen erforderliche Gewicht und Trägheitsmoment des Kupplungssystems verringert wird.

### KURZÜBERBLICK ÜBER DIE ERFINDUNG

Die Erfindung umfasst im weitesten Sinne einen Drehmomentwandler mit einer Pumpenkupplung und einer Drehmomentwandlerkupplung. Die Pumpenkupplung ist funktionell so angeordnet, dass sie ein Eingangsdrehmoment für den Drehmomentwandler zur Pumpe im Drehmomentwandler überträgt. Die Drehmomentwandlerkupplung ist funktionell so angeordnet, dass sie das Eingangsdrehmoment zu einer Abtriebswelle des Drehmomentwandlers überträgt. Die Pumpenkupplung ist so angeordnet, dass die Kupplung der Pumpe mit dem Eingangsdrehmoment bestehen bleibt, während das Eingangsdrehmoment mit der Welle gekuppelt wird. Der Drehmomentwandler beinhaltet auch mindestens ein Schwingungsdämpfungsmittel. Das Dämpfungsmittel ist funktionell mit dem Eingangsdrehmoment verbunden und so im Drehmomentwandler angebracht, dass das Eingangsdrehmoment durch das mindestens eine Schwingungsdämpfungsmittel übertragen wird, während das Eingangsdrehmoment zur Pumpe übertragen wird.

Bei einigen Aspekten beinhaltet der Drehmomentwandler eine mit dem Eingangsdrehmoment verbundene biegsame Scheibe, wobei das mindestens eine Schwingungsdämpfungsmittel zwischen der biegsamen Scheibe und der Pumpenkupplung angeordnet ist. Der Drehmomentwandler umfasst ferner eine funktionell mit dem mindestens einen Dämpfungsmittel, der Pumpenkupplung und der Drehmomentwandlerkupplung verbundene erste Reaktionsplatte. Die Pumpenkupplung und die Drehmomentwandlerkupplung sind so angeordnet, dass sie die erste Platte mit der Pumpe bzw. mit der Welle kuppeln.

Bei einigen Aspekten beinhaltet der Drehmomentwandler mindestens einen Vorsprung, der das mindestens eine Schwingungsdämpfungsmittel mit der biegsamen Scheibe verbindet, und das mindestens eine Schwingungsdämpfungsmittel beinhaltet mindestens eine Feder. Der mindestens eine Vorsprung und die mindestens eine Feder befinden sich in radialer Richtung jeweils in gleichen Ebenen und sind in axialer Richtung auf eine Längsachse des Ständers ausgerichtet, während der mindestens eine Vorsprung und die mindestens eine Feder tangential gegenüber der Achse verschoben sind. Bei einigen Aspekten beinhaltet der Drehmomentwandler eine funktionell mit dem mindestens einen Schwingungsdämpfungsmittel und der Pumpenkupplung verbundene zweite Reaktionsplatte. Die Pumpenkupplung und die Drehmomentwandlerkupplung sind so angeordnet, dass die Pumpenkupplung das Eingangsdrehmoment zur Drehmomentwandlerkupplung überträgt.

Bei einigen Aspekten ist das mindestens eine Schwingungsdämpfungsmittel zwischen der Pumpenkupplung und der Pumpe angeordnet, und die Pumpenkupplung und die Drehmomentwandlerkupplung sind so angeordnet, dass die Pumpenkupplung das Eingangsdrehmoment zur Drehmomentwandlerkupplung überträgt. Bei einigen Aspekten beinhaltet der Drehmomentwandler eine erste und eine zweite Flüssigkeitskammer, die mit der Pumpenkupplung bzw. der Drehmomentwandlerkupplung in Verbindung stehen, und eine zwischen der ersten und der zweiten Kammer befindliche und funktionell so angeordnete gekerbte Zwischenscheibe, dass ein Flüssigkeitsaustausch zwischen der ersten und der zweiten Kammer stattfinden kann. Bei einigen Aspekten beinhaltet der Drehmomentwandler eine dritte und eine vierte Flüssigkeitskammer, die mit der Pumpenkupplung bzw. der Drehmomentwandlerkupplung in Verbindung stehen, und eine zwischen der dritten und der vierten Kammer befindliche Zwischenscheibe, die so angeordnet ist, dass ein Flüssigkeitsaustauschen zwischen der dritten und der dritten Kammer stattfinden kann.

Die Erfindung umfasst im weitesten Sinne auch einen Drehmomentwandler mit einer Drehmomentwandlerkupplung und mindestens einem Mittel zum Übertragen von Trägheitsmomenten von einer Pumpe zum Drehmomentwandler. Die Drehmomentwandlerkupplung ist funktionell so angeordnet, dass sie ein Eingangsdrehmoment für den Drehmomentwandler zu einer Abtriebswelle des Drehmomentwandlers überträgt, und das Mittel ist so angeordnet, dass es die Trägheitsmomente überträgt, wenn das Eingangsdrehmoment zur Welle übertragen wird. Bei einigen Aspekten umfasst der Drehmomentwandler zentrale Ringe, und das mindestens eine Mittel umfasst ferner eine funktionell mit den zentralen Ringen verbundene Lanchester-Dämpfung.

Die Erfindung umfasst im weitesten Sinne auch eine Drehmomentübertragungsvorrichtung, die einen Drehmomentwandler, eine erste Antriebswelle für ein Schaltgetriebe mit zwei Eingängen und ein Mittel zum Kuppeln des Drehmomentwandlers mit der ersten Antriebswelle beinhaltet. Die Vorrichtung beinhaltet auch eine Turbine und einen mit der ersten Antriebswelle verbundenen ersten Kolben. Das Mittel zum Kuppeln beinhaltet eine erste Kupplung, die funktionell so angeordnet ist, dass sie den ersten Kolben mit der Turbine kuppelt. Die Vorrichtung nimmt ein Eingangsdrehmoment auf und beinhaltet ferner eine zweite Kupplung und eine mit dem Eingangsdrehmoment verbundene Flanschscheibe.
Die zweite Kupplung ist funktionell so angeordnet, dass sie die Flanschscheibe mit dem ersten Kolben kuppelt. Ferner beinhaltet die Vorrichtung einen zweiten Kolben, eine zweite Antriebswelle und eine dritte Kupplung. Der zweite Kolben ist mit der zweiten Antriebswelle verbunden. Die dritte Kupplung ist funktionell so angeordnet, dass sie den zweiten Kolben mit der Flanschscheibe kuppelt.

Die Vorrichtung umfasst ferner ein Schwingungsdämpfungsmittel und eine Pumpe. Der Flansch ist mit dem Schwingungsdämpfungsmittel verbunden. Die erste Kupplung ist funktionell so angeordnet, dass sie den ersten Kolben von der Turbine trennt. Die Pumpe dreht sich mit einer ersten Drehzahl und die Turbine mit einer zweiten Drehzahl. Die erste Kupplung trennt und die zweite Kupplung kuppelt Kolben und Turbine, wenn das Verhältnis zwischen der ersten und der zweiten Drehzahl einen bestimmten Wert erreicht hat. Die Vorrichtung beinhaltet auch mindestens eine Flüssigkeitskammer und mindestens ein funktionell so angeordnetes Ventil, dass es den jeweiligen Flüssigkeitsdruck in der mindestens einen Kammer steuert. Das mindestens eine Ventil ist entweder ein zentrifugal gesteuertes Ventil oder ein Leitungsverbindungsventil. Die erste Kupplung tritt als Reaktion auf den jeweiligen Flüssigkeitsdruck in Aktion.

Die Erfindung umfasst auch ein Verfahren zum Überlagern des Trägheitswiderstands auf ein Eingangsdrehmoment für einen Drehmomentwandler.

Die Erfindung umfasst ferner ein Verfahren zur Erhöhung des Drehmoments für ein Schaltgetriebesystem mit zwei Eingängen.

Eine Aufgabe der vorliegenden Erfindung besteht darin, die Leistung von Drehmomentwandlern unter verschiedenen Betriebszuständen und Fahrzeugbetriebsbedingungen zu erhöhen.

Eine andere Aufgabe der Erfindung besteht darin, den Kraftstoffverbrauch eines Fahrzeugs zu senken, indem die Motordrehzahl für die Betriebszustände Kriechgang, Anfahren, Anfahren am Berg und Abwürgen verringert wird.

Diese sowie weitere Aufgaben und Vorteile der vorliegenden Erfindung werden verständlich aus der folgenden Beschreibung bevorzugter Ausführungsarten und den beiliegenden Zeichnungen und Ansprüchen.

### KURZBESCHREIBUNG DER ZEICHNUNGEN

Das Wesen und die Verfahrensweise der vorliegenden Erfindung werden in der folgenden detaillierten Beschreibung der Erfindung in Verbindung mit den beiliegenden Figuren ausführlich beschrieben, wobei:
Fig. 1 eine Teilquerschnittsansicht einer Kupplungsanordnung der vorliegenden Erfindung mit einer Dreiwegeanordnung ist;
Fig. 1A eine perspektivische Ansicht der in Fig. 1 gezeigten Konfiguration von Vorsprung und Feder ist;
Fig. 1B eine Querschnittsansicht entlang der Linie B-B in Fig. 1A ist;
Fig. 2 eine Teilquerschnittsansicht einer Kupplungsanordnung der vorliegenden Erfindung mit einer Dreiwegeanordnung und Doppelkupplungen ist;
Fig. 2A eine perspektivische Ansicht der in Fig. 2 gezeigten gekerbten Zwischenscheibe ist;
Fig. 3 eine Teilquerschnittsansicht einer Kupplungsanordnung der vorliegenden Erfindung mit einer Dreiwegeanordnung und einer Lanchester-Dämpfung ist;
Fig. 4 eine Teilquerschnittsansicht einer Kupplungsanordnung der vorliegenden Erfindung mit einer Zweiwegeanordnung ist;
Fig. 5 eine Teilquerschnittsansicht einer Kupplungsanordnung der vorliegenden Erfindung für einen Drehmomentwandler ist, der mit einem Schaltgetriebe mit zwei Eingängen verbunden ist;
Fig. 6A die Kupplungsanordnung der vorliegenden Erfindung von Fig. 5 zeigt, bei der die Turbinenkupplung mit der Turbine verbunden ist;
Fig. 6B die Kupplungsanordnung der vorliegenden Erfindung von Fig. 6 zeigt, bei der die Turbinenkupplung von der Turbine getrennt und die erste Reibungskupplung eingekuppelt ist;
Fig. 7A eine Motordrehzahlkurve während des Anfahrens eines Fahrzeugs mit einer Kupplungsanordnung der vorliegenden Erfindung ist;
Fig. 7B eine Drehmomentkurve während des Anfahrens eines Fahrzeugs mit einer Kupplungsanordnung der vorliegenden Erfindung ist;
Fig. 7C eine Kraftstoffverbrauchskurve während des Anfahrens eines Fahrzeugs mit einer Kupplungsanordnung der vorliegenden Erfindung ist.

### DETAILLIERTE BESCHREIBUNG DER ERFINDUNG

Grundsätzlich ist klar, dass gleiche Bezugsnummern in verschiedenen Zeichnungsansichten identische oder funktionell ähnliche Strukturelemente der Erfindung bezeichnen. Obwohl die vorliegende Erfindung in Bezug auf die als bevorzugt angesehenen Aspekte beschrieben wird, ist klar, dass die beanspruchte Erfindung nicht auf die beschriebenen Aspekte beschränkt ist.

Darüber hinaus ist klar, dass die vorliegende Erfindung nicht auf die bestimmten beschriebenen Methoden, Materialien und Modifikationen beschränkt ist und daher natürlich Änderungen unterliegen kann. Ferner ist klar, dass die hier verwendeten Begriffe lediglich zur Beschreibung bestimmter Aspekte gewählt wurden und nicht als Einschränkung des Geltungsbereichs der vorliegenden Erfindung anzusehen sind, die nur durch die beiliegenden Ansprüche beschränkt wird.

Falls nicht anders angegeben, haben alle hier verwendeten technischen und wissenschaftlichen Begriffe dieselbe Bedeutung, wie sie für einen Fachmann, an den die vorliegende Erfindung gerichtet ist, normalerweise verständlich ist. Obwohl zum Ausführen oder Testen der Erfindung beliebige Verfahren, Gerätschaften oder Materialien verwendet werden können, die den hier beschriebenen ähnlich oder gleichwertig sind, werden im Folgenden die bevorzugten Verfahren, Gerätschaften und Materialien beschrieben.

Die US-Patentschrift 6 494 303 (Reik et al.) mit dem Titel "Torsional Vibration Damper For a Torque Transmitting Apparatus" ist durch Bezugnahme Bestandteil der vorliegenden Erfindung. Reik et al. beschreiben einen Drehmomentwandler, dessen Eingangsdrehmoment mit einem Schwingungsdämpfer verbunden ist. Der Schwingungsdämpfer ist mit einer Pumpenkupplung und einer Drehmomentwandlerkupplung verbunden. Die Pumpenkupplung ist so angeordnet, dass sie ein Gehäuse des Drehmomentwandlers mit einem Turbinengehäuse im Drehmomentwandler kuppelt. Die Drehmomentwandlerkupplung kuppelt den Schwingungsdämpfer mit einem Pumpengehäuse im Drehmomentwandler und einer Abtriebswelle des Drehmomentwandlers. Im Leerlauf sorgen die beiden Kupplungen dafür, dass das Gehäuse des Drehmomentwandlers und der Schwingungsdämpfer von der Pumpe und der Welle getrennt sind. Damit der Drehmomentwandler wirksam wird, kuppelt die Pumpenkupplung das Gehäuse der Pumpe mit dem Gehäuse des Drehmomentwandlers. Zum vollständigen Einkuppeln trennt die Pumpenkupplung die Gehäuse der Pumpe und des Drehmomentwandlers voneinander, und die Drehmomentwandlerkupplung kuppelt gleichzeitig den Schwingungsdämpfer mit dem Pumpengehäuse und der Welle.

Die folgenden Figuren zeigen bestimmte Kombinationen von Komponenten, bestimmte Kombinationen dieser Komponenten und Mittel zum Verbinden bzw. Verknüpfen der Komponenten. Es ist jedoch klar, dass die vorliegende Erfindung nicht auf die gezeigten Kombinationen, Konfigurationen und Verbindungs-/Verknüpfungsmittel beschränkt ist. Zur Realisierung der vorliegenden Erfindung können auch andere in der Technik bekannte Kombinationen, Konfigurationen und Verbindungs-/Verknüpfungsmittel verwendet werden, wobei solche Änderungen dem Geist der Ansprüche entsprechen und innerhalb deren Geltungsbereichs liegen.

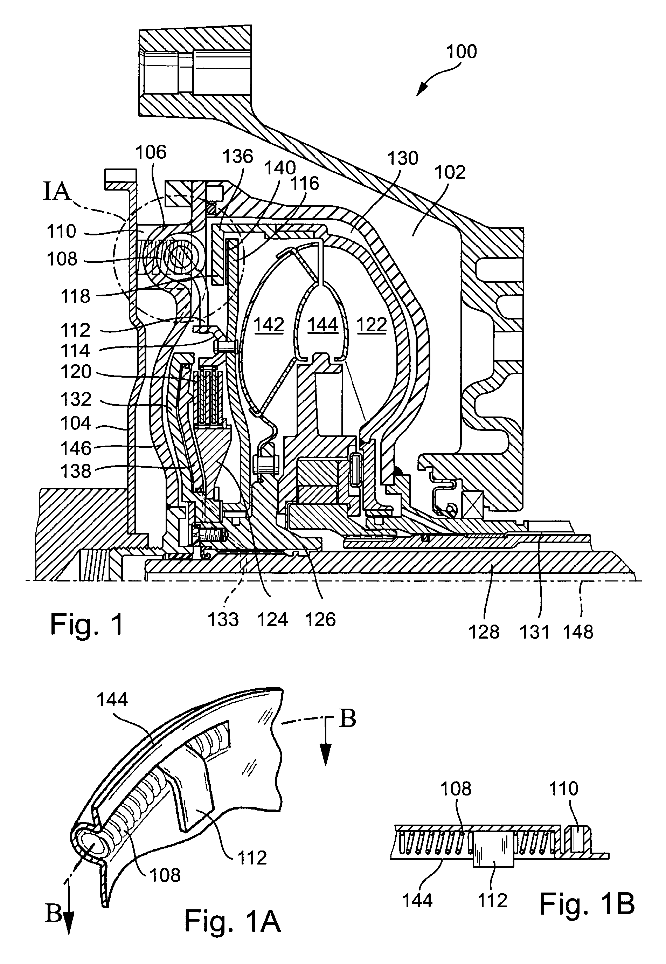

Fig. 1 ist eine Teilquerschnittsansicht einer Kupplungsanordnung 100 der vorliegenden Erfindung mit einer Dreiwegeanordnung. Unter einer Dreiwegeanordnung ist zu verstehen, dass bei der Kupplungsanordnung drei Flüssigkeitskreise verwendet werden. Der Drehmomentwandler 102 ist mit der biegsamen Scheibe 104 verbunden, die wiederum mit einer (nicht gezeigten) Antriebseinheit, zum Beispiel einem Motor, verbunden ist. Die Antriebseinheit überträgt ein Eingangsdrehmoment auf die biegsame Scheibe 104. Der Schwingungsdämpfer 106 beinhaltet Schraubenfedern 108 und ist über Vorsprünge 110 mit der Scheibe 104 verbunden. Ein Flansch 112 ist mit einem Keil 114 verbunden, der wiederum mit einem Kolben oder einer Reaktionsscheibe 116 verbunden ist. Im Folgenden werden die Begriffe Kolben und Reaktionsscheibe synonym gebraucht und bezeichnen eine Struktur, die sich als Reaktion auf Flüssigkeitsdrücke in einem Drehmomentwandler bewegt. Die Pumpenkupplung 118 und die Drehmomentwandlerkupplung 120 sind (über den Keil 114) mit dem Kolben 116 verbunden. Bei einigen Aspekten weist die Kupplung 120 einen geschlossenen Kolben auf, wodurch die zentrifugalen Druckeffekte weitestgehend verringert werden. Die Kupplung 118 überträgt das Eingangsdrehmoment über den Kolben 116 zur Pumpe 122. Die Kupplung 120 ist mit der Scheibe 124 und diese wiederum mit der Nabe 126 verbunden. Die Nabe 126 wiederum ist mit der Abtriebswelle 128 verbunden. Die Kupplung 120 überträgt das Eingangsdrehmoment zur Welle 128.

Im Leerlauf wird der Flüssigkeitsdruck im Flüssigkeitskanal bzw. der Flüssigkeitskammer 130 (die Begriffe Flüssigkeitskanal und Flüssigkeitskammer werden im Folgenden synonym gebraucht) über den Kanal 131 erhöht und im Flüssigkeitskanal 132 über die Öffnung 133 verringert. Durch den hohen Druck im Kanal 130 bewegt sich die Pumpe 122 in axialer Richtung auf die Antriebseinheit zu (in Fig. 1 nach links), wodurch sich die Scheibe 136 vom Kolben 116 weg bewegt und die Pumpenkupplung 118 getrennt wird. Der niedrige Druck im Kanal 132 bewirkt, dass die Scheibe 138 von der Kupplung 120 getrennt bleibt. Deshalb sind beide Kupplungen getrennt und weder die Pumpe 122 noch die Welle 128 mit dem Abtriebsdrehmoment verbunden. Dadurch wird im Leerlauf die auf die Antriebseinheit wirkende Last verringert und der energetische Wirkungsgrad der Antriebseinheit verbessert.

Zur Aktivierung des Drehmomentwandlers 102 wird der Druck im Kanal 130 erhöht, wodurch sich die Pumpe 122 in axialer Richtung auf das (nicht gezeigte) Getriebe zu bewegt (in Fig. 1 von links nach rechts). Diese Bewegung führt zum Einkuppeln der Kupplung 118.

Das heißt, die Scheibe 136 bewegt sich von links nach rechts und kuppelt den Kolben 116 ein. Fig. 1 zeigt ein auf dem Kolben 116 angebrachtes Reibungsmaterial 140, mittels dessen der Kolben 116 und die Scheibe 136 ineinander greifen. Das oben erwähnte Ineinandergreifen führt dazu, dass das Eingangsdrehmoment zur Pumpe 122 übertragen wird. Es ist jedoch klar, dass das Reibungsmaterial auch auf der Scheibe 136 oder sowohl auf dem Kolben 116 als auch auf der Scheibe 136 angebracht werden kann. In der folgenden Beschreibung wird das Reibungsmaterial in einer bestimmten Konfiguration dargestellt, wobei jedoch bezüglich der Beschreibung des Reibungsmaterials 140 klar ist, dass auch andere Konfigurationen möglich sind.
Im Interesse einer kürzeren Darstellung wird die vorangehende Erörterung der Anbringung der Reibungsmaterialien nicht wiederholt. Die Kupplung 120 bleibt ausgekuppelt. Dadurch wird die Welle 128 über die Flüssigkeitsverbindung der Pumpe 122 und der Turbine 142 angetrieben.

Zum Einkuppeln wird der Druck im Kanal 132 über die Öffnung 133 erhöht, wodurch sich die Scheibe 138 von links nach rechts bewegt und die Kupplung 120 eingekuppelt wird. Die eingekuppelte Kupplung 120 überträgt das Drehmoment vom Keil 114 zur Scheibe 124, welche die Energie wie oben beschrieben auf die Welle 128 überträgt. Die Kupplung 118 bleibt eingekuppelt. Auf die Komponenten eines Drehmomentwandlers, der von einer Antriebseinheit ein Eingangsdrehmoment aufnimmt, wirkt auch eine Last ein, die aufgrund der Trägheit des Fahrzeugs dem Eingangsdrehmoment entgegen wirkt. Beim Wechsel vom Drehmomentwandlermodus zum Kupplungsmodus bei getrennter Pumpe kann die Last zu rasch abnehmen, sodass die Antriebseinheit übertourt. Es ist jedoch von Vorteil, wenn die Kupplung 118 beim Wechsel vom Drehmomentwandlermodus zum Einkuppeln eingekuppelt bleibt. Das heißt, das Trägheitsmoment der Pumpe stabilisiert das Eingangsdrehmoment und verringert Schwankungen des Drehmoments. Bei einigen Aspekten wird die Kupplung 118 ausgekuppelt, sobald sich das auf die Antriebswelle übertragene Eingangsdrehmoment stabilisiert hat. Diese Aspekte sind besonders dann von Vorteil, wenn der Drehmomentwandler 102 im Kupplungsmodus bei niedriger Motordrehzahl arbeitet. Bei niedrigen Drehzahlen kann es zu niederfrequenten Resonanzen kommen und die Resonanz durch Auskuppeln der Kupplung 118 verschoben werden. Der Druck in der Kammer 144 bleibt in allen Betriebszuständen hoch.

Fig. 1A ist eine perspektivische Ansicht der in Fig. 1 gezeigten Konfiguration von Vorsprung und Feder.

Fig. 1B ist eine Teilquerschnittsansicht entlang der Linie B-B in Fig. 1A. Aus den Figuren 1, 1A und 1B ist Folgendes ersichtlich. Die Figuren 1A und 1B zeigen die Konfiguration der Federn 108, der Vorsprünge 110, des Flansches 122 und des Deckels 146. In Fig. 1 befinden sich die Federn 108 und die Vorsprünge 110 bezüglich der Achse 148 jeweils innerhalb derselben radialen und axialen Ebenen. Bei einigen Aspekten sind die Federn 108 und die Vorsprünge 110, wie in Fig. 1B dargestellt, in tangentialer Richtung gegeneinander versetzt, damit sich die Federn und die Vorsprünge nicht gegenseitig stören. Durch den Versatz kann der Platz besser ausgenutzt werden, was besonders bei Drehmomentwandlern oder Schwingungsdämpfern von Vorteil ist, bei denen es Platzprobleme gibt.

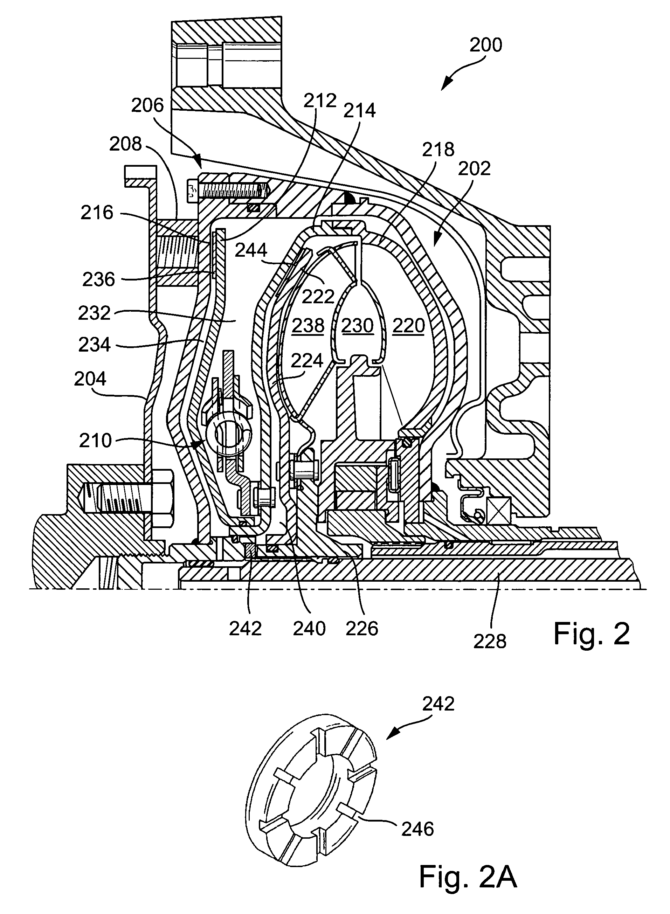

Fig. 2 ist eine Teilquerschnittsansicht der Kupplungsanordnung 200 der vorliegenden Erfindung mit einer Dreiwegeanordnung und zwei Kupplungen. Bei manchen Aspekten ist jede Kupplung eine Drehmomentwandlerkupplung. Bei einigen Aspekten ist eine Kupplung eine Drehmomentwandlerkupplung und die andere Kupplung eine Pumpenkupplung. Der Drehmomentwandler 202 ist mit der biegsamen Scheibe 204 verbunden, die wiederum mit einer (nicht gezeigten) Antriebseinheit, zum Beispiel einem Motor, verbunden ist. Die Antriebseinheit überträgt ein Eingangsdrehmoment auf die biegsame Scheibe 204. Der Deckel 206 ist durch Vorsprünge 208 mit der Scheibe 204 verbunden. Der Schwingungsdämpfer 210 ist mit der Scheibe 212 und der Scheibe bzw. dem Zwischendeckel 214 verbunden. Die Pumpenkupplung 216 ist mit der Scheibe 212 und diese wiederum über den Dämpfer 210 mit der Scheibe 214 verbunden. Die Scheibe 214 ist mit dem Gehäuse 218 der Pumpe 220 verbunden. Die Kupplung 216 überträgt das Eingangsdrehmoment zur Pumpe 220. Die Drehmomentwandlerkupplung 222 ist mit der Scheibe 214 und der Scheibe 224 verbunden. Die Scheibe 224 ist mit der Nabe 226 und diese wiederum mit der Abtriebswelle 228 verbunden. Die Kupplung 222 überträgt das Eingangsdrehmoment zur Welle 228.

Im Leerlauf wird in allen Flüssigkeitskanälen 230, 232 und 234 ein hoher Flüssigkeitsdruck aufrecht erhalten. Diese hohen Drücke führen dazu, dass die Kupplungen 216 und 222 ausgekuppelt werden. Deshalb sind weder die Pumpe 220 noch die Welle 228 mit dem Ausgangsdrehmoment verbunden. Dadurch werden im Leerlauf die an der Antriebseinheit anliegende Last und der Kraftstoffverbrauch der Antriebseinheit verringert.

Damit der Drehmomentwandler 202 in Aktion tritt, wird der Druck im Kanal 230 so weit wie möglich verringert, ohne dass es in der Pumpe 220 zur Kavitation kommt. Der Druck im Kanal 232 wird so hoch wie möglich gehalten. Der Druck im Kanal 234 wird höher als der Druck im Kanal 230, jedoch niedriger als der Druck im Kanal 232 gehalten. Diese Konfiguration der Drücke bewirkt, dass sich die Scheibe 212 in Richtung des Deckels 206 bewegt und die Kupplung 216 eingekuppelt wird. In Fig. 2 ist das Reibungsmaterial 236 auf der Scheibe 212 dargestellt, das zum Einkuppeln zwischen der Scheibe 212 und dem Deckel 206 führt. Das oben erwähnte Einkuppeln führt dazu, dass das Eingangsdrehmoment zur Pumpe 220 übertragen wird. Die Kupplung 222 bleibt ausgekuppelt. Deshalb wird die Welle 228 durch die Flüssigkeitsverbindung der Pumpe 220 und der Turbine 238 angetrieben.

Der Flüssigkeitskanal 240 stellt über die gekerbte Zwischenscheibe 242 eine Flüssigkeitsverbindung zum Flüssigkeitskanal 234 her. Zum Einkuppeln wird der Druck im Kanal 240 auf einen Minimalwert verringert, wodurch sich die Scheiben 214 und 224 aufeinander zu bewegen. Durch diese Bewegung kuppelt die Kupplung 222 ein. Die eingekuppelte Kupplung 222 überträgt wie oben beschrieben das Drehmoment von der Scheibe 214 zur Welle 228. Die Kupplung 216 bleibt eingekuppelt. Das auf der Scheibe 224 dargestellte Reibungsmaterial 244 bewirkt, dass die Scheiben 214 und 224 ineinander greifen. Eine mit einem Drehmomentwandler verbundene Antriebseinheit kann wie oben beschrieben beim Wechsel vom Drehmomentwandlermodus in den Kupplungsmodus auf unterwünschte Weise übertouren. Die Kupplung 216 bleibt jedoch während des Wechsels vom Drehmomentwandlermodus zum Kupplungsmodus eingekuppelt.

Fig. 2A ist eine perspektivische Ansicht der in Fig. 2 gezeigten gekerbten Zwischenscheibe 242. Aus den Figuren 2 und 2A ist Folgendes ersichtlich. Die Zwischenscheibe 242 beinhaltet Nuten 246, die eine Flüssigkeitsverbindung zwischen den Flüssigkeitskanälen 234 und 240 herstellen. Bei einigen (nicht gezeigten) Aspekten ist die Zwischenscheibe nicht gekerbt. Stattdessen ist die Scheibe 214 geschlitzt (nicht dargestellt), damit eine Flüssigkeitsverbindung zwischen den Kanälen 232 und 240 entsteht. Dann bleibt der Druck im Leerlaufmodus in allen Kanälen hoch. Um in den Drehmomentwandlermodus überzugehen, wird der Druck im Kanal 232 verringert, damit die Kupplung 216 einkuppelt. Zum Übergang in den Kupplungsmodus wird der Druck im Kanal 232 auf einen mittleren Wert zwischen dem Druck im Kanal 230 und dem Druck im Kanal 234 verringert. Durch diese Konfiguration kann der Druck im Kanal 230 hoch genug gehalten werden, damit es nicht zur Kavitation kommt.

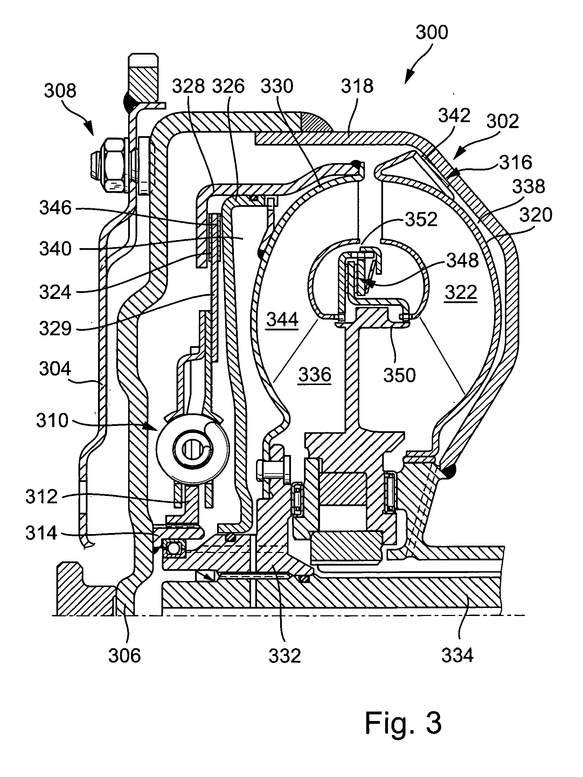

Fig. 3 ist eine Teilquerschnittsansicht der Kupplungsanordnung 300 der vorliegenden Erfindung mit einer Dreiwegeanordnung und einem Lanchester-Dämpfer. Der Drehmomentwandler 302 ist mit der biegsamen Scheibe 304 und diese wiederum mit einer (nicht gezeigten) Antriebseinheit, zum Beispiel einem Motor, verbunden. Die Antriebseinheit überträgt ein Eingangsdrehmoment zur biegsamen Scheibe 304. Der Deckel 306 ist über eine Schweißstelle an der Schraube 308 mit der Scheibe 304 verbunden. Der Torsionsdämpfer 310 beinhaltet einen Flansch 312, der über einen Keil 314 mit dem Deckel 306 verbunden ist. Die Pumpenkupplung 316 ist mit dem Drehmomentwandlergehäuse 318 und dem Pumpengehäuse 320 verbunden. Die Kupplung 316 überträgt das Eingangsdrehmoment zur Pumpe 322. Die Drehmomentwandlerkupplung 324 ist mit dem Kolben 326, der Scheibe 328 und der Scheibe 329 verbunden. Die Scheibe 329 ist mit dem Dämpfer 310 verbunden. Die Scheibe 326 ist mit dem Turbinengehäuse 330 und dieses wiederum mit der Nabe 332 verbunden. Die Nabe 332 ist mit der Abtriebswelle 334 verbunden. Die Kupplung 324 überträgt das Eingangsdrehmoment zur Welle 334. Bei einigen Aspekten ist die Kupplung 324 eine Kupplung mit geschlossenem Kolben. Eine Kupplung mit geschlossenem Kolben ist von zentrifugalen Druckeffekten weniger betroffen.

Im Leerlauf wird der Flüssigkeitsdruck in den Kanäle 336 und 338 erhöht und der Druck im Kanal 340 niedrig gehalten. Diese Drücke bewirken, dass die Kupplungen 316 und 324 ausgekuppelt werden. Deshalb liegt das Eingangsdrehmoment weder an der Pumpe 322 noch an der Welle 334 an. Dadurch werden im Leerlaufmodus die am Antrieb anliegende Last und der Energieverbrauch verringert.

Um den Drehmomentwandler 302 in Aktion zu versetzen, wird der Druck in den Kanälen 338 und 340 so niedrig wie möglich gehalten und der Druck im Kanal 336 erhöht. Diese Druckkonfiguration führt dazu, dass sich die Pumpe 322 in axialer Richtung zum (nicht gezeigten) Getriebe bewegt (in Fig. 3 von links nach rechts) und die Kupplung 316 einkuppelt. Das in Fig. 3 am Gehäuse 320 dargestellte Reibungsmaterial 342 bewirkt eine Kopplung zwischen den Gehäusen 318 und 320. Die oben erwähnte Kopplung führt dazu, dass das Eingangsdrehmoment zur Pumpe 322 übertragen wird. Die Kupplung 324 bleibt ausgekuppelt. Dadurch wird die Welle 334 durch die Flüssigkeitsverbindung der Pumpe 322 und der Turbine 344 angetrieben.

Um in den Kupplungszustand zu gelangen, wird der Druck im Kanal 336 verringert und der Druck in den Kanälen 338 und 340 erhöht. Der Druck im Kanal 340 wird über den Druck im Kanal 338 hinaus erhöht. Durch diese Drücke wird die Kupplung 324 eingekuppelt. Der Druck in der Kammer 336 ist der Mindestdruck, der erforderlich ist, um die Kavitation im Drehmomentwandler zu vermeiden. Der Druck in der Kammer 338 ist der Mindestdruck, der erforderlich ist, um eine ausreichende Flüssigkeitskühlung zu gewährleisten. Der Druck in der Kammer 340 ist der Mindestdruck, der benötigt wird, um die erforderliche Leistung der Kupplung 324 zu erreichen. Die eingekuppelte Kupplung 324 überträgt wie oben beschrieben das Drehmoment von der Scheibe 329 zur Welle 334. Das auf der Scheibe 329 dargestellte Reibungsmaterial 346 bewirkt eine Kopplung zwischen den Scheiben 328 und 329 sowie dem Kolben 326.

Ein Zweimassen-Drehmomentwandler kann zur Verringerung von Drehmomentschwankungen in der Kraftübertragung verwendet werden. Deshalb ist der Dämpfer 348 in den Kernringen 350 des Drehmomentwandlers 302 untergebracht und sorgt während des Kupplungsmodus für die Übertragung des Trägheitsmoments von der Pumpe 322 zur Turbine 344. Bei einigen Aspekten ist der Dämpfer ein Lanchester-Dämpfer. Im Wandlermodus übersteigt das Drehmoment im Drehmomentwandler 302 das höchstzulässige Drehmoment des Dämpfers 348, sodass dieser zu rutschen beginnt. Da jedoch das höchstzulässige Drehmoment des Dämpfers 348 relativ niedrig ist, wirkt sich dieses Durchrutschen deutlich auf die Leistung des Drehmomentwandlers 302 aus. Im Kupplungsmodus, wenn die durch den Drehmomentwandler 302 übertragenen Drehmomentschwankungen gering sind (geringer als das höchstzulässige Drehmoment des Dämpfers 348), kuppelt der Dämpfer 348 die Pumpe mit der Turbine und erzeugt so die Funktionalität eines Zweimassen-Drehmomentwandlers.

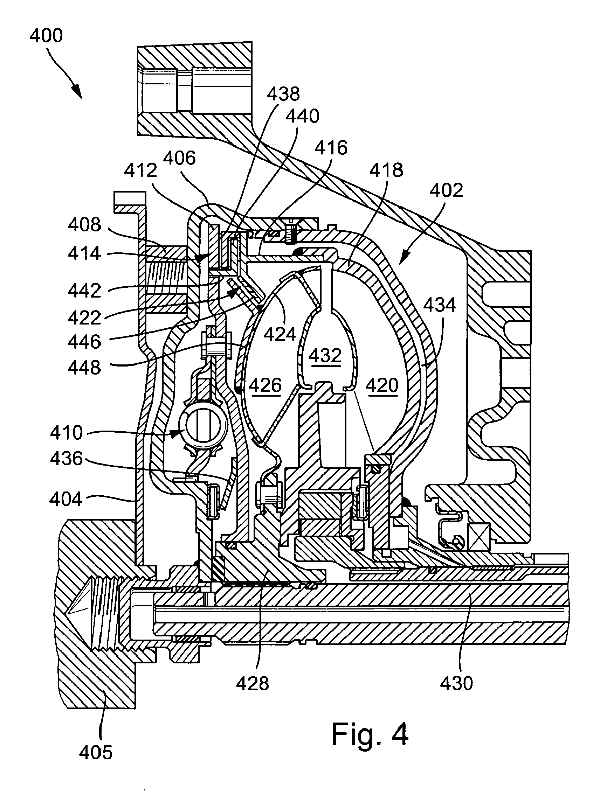

Fig. 4 ist eine Teilquerschnittsansicht einer Kupplungsanordnung 400 der vorliegenden Erfindung mit einer Zweiwegeanordnung. Unter einer Zweiwegeanordnung ist zu verstehen, dass zwei Flüssigkeitskreise verwendet werden. Der Drehmomentwandler 402 ist mit der biegsamen Scheibe 404 und diese wiederum mit einer (teilweise dargestellten) Antriebseinheit 405, zum Beispiel einem Motor, verbunden. Die Antriebseinheit überträgt ein Eingangsdrehmoment zur biegsamen Scheibe 404. Der Deckel 406 ist über Vorsprünge 408 mit der Scheibe 404 verbunden. Der Drehmomentdämpfer 410 ist mit dem Deckel 406 und dem Kolben 412 verbunden. Die Pumpenkupplung 414 ist mit dem Kolben 412 und der Scheibe 416 verbunden. Die Scheibe 416 ist mit dem Gehäuse 418 der Pumpe 420 verbunden. Die Kupplung 414 überträgt das Eingangsdrehmoment zur Pumpe 420. Die Drehmomentwandlerkupplung 422 ist mit der Scheibe 416 und dem Gehäuse 424 der Turbine 426 verbunden. Das Gehäuse 424 ist mit der Nabe 428 und diese wiederum mit der Abtriebswelle 430 verbunden. Die Kupplungen 414 und 422 übertragen das Eingangsdrehmoment zur Welle 430.

Im Leerlaufmodus bleibt der Flüssigkeitsdruck in der Flüssigkeitskammer 432 hoch und in der Kammer 434 niedrig. Diese Drücke bewirken, dass sich die Pumpe 420 in axialer Richtung auf das (nicht dargestellte) Getriebe zu bewegt (in Fig. 4 von links nach rechts) und die Kupplungen 414 und 422 auskuppelt. Daraufhin liegt das Eingangsdrehmoment weder an der Pumpe 420 noch an der Welle 430 an. Aus diesem Grunde ist im Leerlaufmodus die an der Antriebseinheit anliegende Last und somit der Energieverbrauch der Antriebseinheit verringert. Im Leerlaufmodus drückt die Membranfeder 436 die Scheibe 412 in axialer Richtung zum Getriebe.

Um den Drehmomentwandler 402 in Aktion zu versetzen, wird der Druck in der Kammer 432 verringert und der Druck in der Kammer 434 auf einen mittleren Wert gebracht. Daraufhin bewegt sich die Pumpe 420 in axialer Richtung auf die Antriebseinheit zu (in Fig. 4 von rechts nach links), und die Kupplung 414 kuppelt ein. Die durch die Druckdifferenz an der Pumpe 420 ausgeübte axiale Kraft wird über die Feder 436 von der Scheibe 412 aufgenommen. Die Feder biegt sich so weit durch, dass die Kupplung 414 einkuppeln kann, aber nicht so weit, dass die Kupplung 422 einkuppeln kann. Die in Fig. 4 dargestellten Reibungsmaterialien 438 auf den Scheiben 440 und 442 kuppeln die Scheiben 412 und 416 miteinander. Das oben erwähnte Einkuppeln führt dazu, dass das Eingangsdrehmoment zur Pumpe 420 übertragen wird. Die Kupplung 422 bleibt ausgekuppelt. Somit wird die Welle 430 durch die Flüssigkeitsverbindung zwischen der Pumpe 420 und der Turbine 426 angetrieben.

Zum Übergang in den Kupplungsmodus wird der Druck im Kanal 434 bis zu einem Maximalwert erhöht, sodass sich die Pumpe 420 in axialer Richtung weiter zur Antriebseinheit hin bewegt. Die infolge der Druckdifferenz in der Pumpe 420 ausgeübte stärkere Kraft wird durch die Kupplung 414 zur Scheibe 412 übertragen und biegt die Feder 436 weiter durch. Dadurch bewegt sich die Scheibe 412 weiter in Richtung der Antriebseinheit und kuppelt die Kupplung 422 ein. Die eingekuppelte Kupplung 422 überträgt wie oben beschrieben das Drehmoment von der Scheibe 412 zur Welle 430. Die Kupplung 414 bleibt eingekuppelt. Das Reibungsmaterial 446 auf der Scheibe 416 kuppelt die Scheiben 416 und 448 miteinander. Wie oben bereits erwähnt, kann eine mit einem Drehmomentwandler verbundene Antriebseinheit beim Wechsel vom Drehmomentwandlermodus zum Kupplungsmodus auf unerwünschte Weise übertouren. Beim Wechsel vom Drehmomentwandlermodus zum Kupplungsmodus bleibt jedoch das Gehäuse 406 mit dem Gehäuse 408 verbunden und überträgt Trägheitsmoment von der Pumpe 420 zum Gehäuse 424.

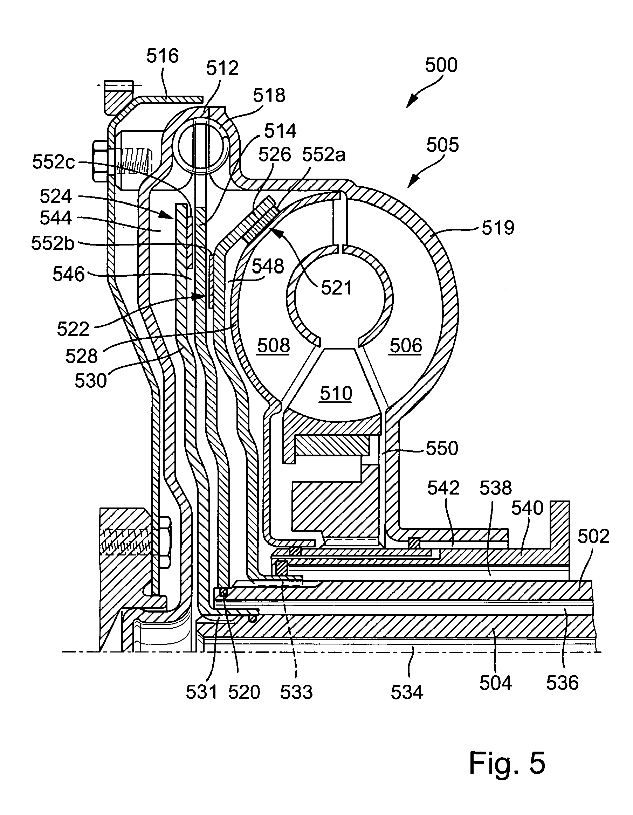

Fig. 5 ist eine Teilquerschnittsansicht einer Kupplungsanordnung 500 der vorliegenden Erfindung für einen Drehmomentwandler, der mit einem Getriebe mit zwei Eingängen verbunden ist. Unter einem Getriebe mit zwei Eingängen ist zu verstehen, dass die Kraftübertragung aus einem manuellen Schaltgetriebe besteht, das eine erste Antriebswelle 502 und eine zweite Antriebswelle 504 umfasst, die mit einer ungeraden bzw. einer geraden Anzahl von (nicht gezeigten) Zahnrädern verbunden sind. Die Antriebswellen 502 und 504 sind konzentrisch zueinander. Im Folgenden werden die Antriebswellen 502 und 504 als ungerade Getriebeantriebswelle bzw. als gerade Getriebeantriebswelle bezeichnet. Unter einer "ungeraden Getriebeantriebswelle" ist zu verstehen, dass eine erste Antriebswelle mit einer ungeraden Anzahl, also ein, drei, fünf, usw., von Zahnrädern in der Kraftübertragung verbunden ist. Ferner ist unter einer "geraden Getriebeantriebswelle" zu verstehen, dass eine zweite Antriebswelle mit einer geraden Anzahl, also zwei, vier, sechs, usw., von Zahnrädern in der Kraftübertragung verbunden ist. Es ist jedoch klar, dass ungerade und gerade Getriebeantriebswellen mit einer Vielzahl in der Kraftübertragung angeordneter Zahnräder verbunden sein können.

Die vorliegende Erfindung 500 umfasst ein Mittel zum Kuppeln des Drehmomentwandlers 505 mit einer ungeraden Getriebeantriebswelle 502. Der Drehmomentwandler 505 umfasst allgemein eine Pumpe 506, eine Turbine 508, ein zwischen Pumpe 506 und Turbine 508 angeordnetes Leitrad 510 und eine Scheibe 512. Die Scheibe 512 ist zwischen der Flanschscheibe 514 und der biegsamen Scheibe 516 angeordnet. Die Scheibe 516 ist über eine (nicht gezeigte) Abtriebswelle mit einer (nicht gezeigten) Antriebseinheit, zum Beispiel mit einem Verbrennungsmotor, verbunden. Die Flanschscheibe 514 ist mit dem Schwingungsdämpfer 518 verbunden. Die biegsame Scheibe 516 ist mit der Scheibe 512 und diese wiederum so mit dem Gehäuse 519 des Drehmomentwandlers verbunden, dass sich das Gehäuse zusammen mit der biegsamen Scheibe 516 dreht. Das von der Antriebseinheit kommende Eingangsdrehmoment wird von der biegsamen Scheibe 516 zur Scheibe 512, weiter zum Schwingungsdämpfer 518 und dann zur Flanschscheibe 514 übertragen. Die Flanschscheibe 514 ist auf der ungeraden Getriebeantriebswelle 502 angebracht und, mittels eines Dichtungsrings 520 abgedichtet, mit dieser verbunden.

Die Anordnung 500 beinhaltet eine Turbinenkupplung 521 und die Reibungskupplungen 522 und 524. Es jedoch klar, dass die Turbinenkupplung 521 ebenfalls als Reibungskupplung bekannt ist. Die Reibungskupplung 522 ist zwischen der Flanschscheibe 514 und dem Kolben 526 angeordnet. Die Kupplung 522 ist funktionell so angeordnet, dass sie die Flanschscheibe 514 und den Kolben 526 kuppelt und so das durch die Flanschscheibe 514 aufgenommene Eingangsdrehmoment von der Flanschscheibe 514 über den Kolben 526 zur ungeraden Getriebeantriebswelle 502 überträgt. Der Kolben ist zwischen dem Turbinengehäuse 528 und der Flanschscheibe 514 angeordnet. Die Reibungskupplung 524 ist zwischen dem Kolben 530 und der Flanschscheibe 514 angeordnet. Die Kupplung 524 ist funktionell so angeordnet, dass sie die Flanschscheibe 514 mit dem Kolben 530 kuppelt und so das durch die Flanschscheibe 514 aufgenommene Eingangsdrehmoment von der Flanschscheibe 514 über den Kolben 530 zur geraden Getriebeantriebswelle 504 überträgt. Der Kolben 530 ist auf der geraden Getriebeantriebswelle 504 angebracht und mittels eines Keils 531 auf dieser arretiert. Der Kolben 530 ist ebenfalls, mittels eines (nicht gezeigten) Dichtungsrings abgedichtet, mit der geraden Getriebeantriebswelle 504 verbunden.

Bei einigen Aspekten umfasst das Mittel zum Ein- und Auskuppeln des Kolbens 526 mit der Turbine eine Turbinenkupplung 521. Der Kolben 526 ist auf der ungeraden Getriebeantriebswelle 502 angebracht und mittels eines Keils 533 auf der ungeraden Getriebeantriebswelle 502 arretiert. Im Folgenden wird ausführlich beschrieben, wie die Reibungskupplungen 522 und 524 sowie die Turbinenkupplung 521 durch gesteuerte Änderungen des Hydraulikdrucks eines unter Druck stehenden Mediums eingekuppelt werden, das durch eine Leitung 534 im Innern der geraden Getriebeantriebswelle 504, durch eine Leitung 536 zwischen der ungeraden Getriebeantriebswelle 502 und der geraden Getriebeantriebswelle 504, durch eine Leitung 538 zwischen der Leitradwelle 540 und der ungeraden Getriebeantriebswelle 502 und/oder durch eine Leitung 542 zwischen der Leitradwelle 540 und dem Gehäuse 519 zugeführt wird. Die Leitung 534 ist ein Einlasskanal. Unter einem "Einlasskanal" ist zu verstehen, dass ein Medium von der (nicht gezeigten) Getriebewanne zur Leitung 534 fließt. Die Leitungen 534, 536, 538 und 542 weisen entsprechende Flüssigkeitskammern 544, 546, 548 und 550 auf. Der Druck in der Leitung 534 und der entsprechenden Kammer 544 ist immer hoch. Die Leitungen 536, 538 und 542 sind Auslasskanäle. Unter einem "Auslasskanal" ist zu verstehen, dass ein Medium durch die Leitungen 536, 538 und 542 wieder zur Getriebewanne zurück fließt. Der Druck in den Leitungen 536, 538 und 542 wird durch (nicht gezeigte) Ventile geregelt. Als komprimiertes Medium kann beispielsweise ein Hochdrucköl verwendet werden. Es ist jedoch klar, dass auch andere Hochdruckmedien verwendet werden können und diese Modifikationen dem Geist der beanspruchten Erfindung entsprechen und innerhalb deren Geltungsbereichs liegen. Am Kolben 526, am Kolben 526 und an der Scheibe 530 sind Reibungsmaterialien 552a, 552b bzw. 552c angebracht.

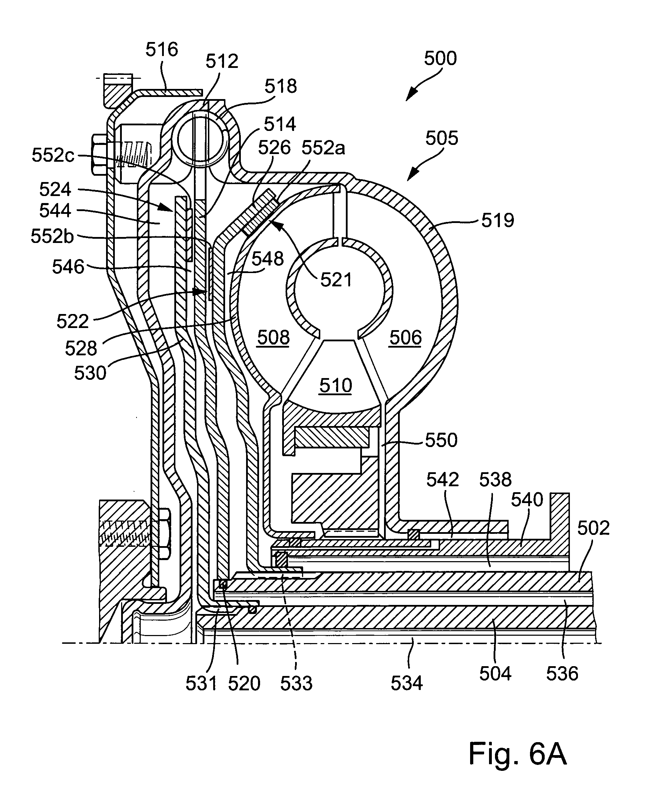

Fig. 6A zeigt die Kupplungsanordnung 500 der vorliegenden Erfindung von Fig. 5, bei der die Turbine 508 durch die Turbinenkupplung 521 eingekuppelt ist. Im Leerlauf, wenn die Kupplung ausgekuppelt ist, sind alle drei Auslassventile der Leitungen 536, 538 und 542 geschlossen, sodass das Öl nicht aus dem Drehmomentwandler 505 austreten kann. Um die Turbinenkupplung für den Kriechgang und das Anfahren im Drehmomentwandlermodus einzukuppeln, wird ein Bremspedal des Fahrzeug freigegeben (nicht gezeigt) und das Ventil für die Leitung 542 geöffnet, sodass Öl in die Wanne abfließen kann. Deshalb ist der Druck in der Leitung 542 und in der entsprechenden Flüssigkeitskammer 550 niedrig. Die Ventile der Leitungen 536 und 538 bleiben geschlossen, sodass der Druck in den entsprechenden Flüssigkeitskammer 546 und 548 hoch bleibt. Der Druck in der Leitung 534 und der entsprechenden Flüssigkeitskammer 544 bleibt immer hoch. Es ist klar, dass der Kolben 526 gekerbt ist, damit im Drehmomentwandlermodus Öl zur Kühlung mit einer Durchflussmenge von etwa 2 bis 3 l/min durchfließen kann. Der hohe Druck in den Leitungen 534, 536 und 538 bewirkt, dass sich der Kolben 526 in axialer Richtung zur Turbine 508 verschiebt und die Turbinenkupplung 521 über das Turbinengehäuse 528 mit der Turbine 508 verbunden wird. Somit baut sich langsam ein Kriechdrehmoment auf, das von der Turbine 508 kommende Drehmoment nimmt zu, und das Fahrzeug beginnt zu kriechen und anzufahren. Unter "Kriechen und Anfahren" ist zu verstehen, dass das sich Fahrzeug aus dem Stand in Bewegung setzt. Dem Fachmann ist klar, dass der Drehmomentwandler 505 das Drehmoment vervielfacht. Diese Drehmomentvervielfachung wird im Kriechgang, beim Anfahren, beim Anfahren am Berg und beim Abwürgen genutzt. Wenn das Verhältnis der Motordrehzahl zur Turbinendrehzahl einen bestimmten Wert überschreitet, kuppelt die mit der ungeraden Getriebeantriebswelle 502 verbundene Reibungskupplung 522 ein. Bei einigen Aspekten ist das vorgegebene Verhältnis etwa gleich 0,5. Das heißt, die Turbine 508 dreht sich mit der Drehzahl der Kraftübertragung und mit der halben Drehzahl der Pumpe 506, die sich mit der Drehzahl der Antriebseinheit dreht. Da der Drehmomentwandler 505 das Drehmoment vervielfacht, wird zum sanften und schnellen Beschleunigen beim Anfahren ein niedrigeres erstes Übersetzungsverhältnis benötigt. Ferner wird durch die Drehmomentvervielfachung der in einer Kraftübertragung erforderliche Mittenabstand verringert, sodass auch das Gewicht und die Kosten der Kraftübertragung verringert werden können.

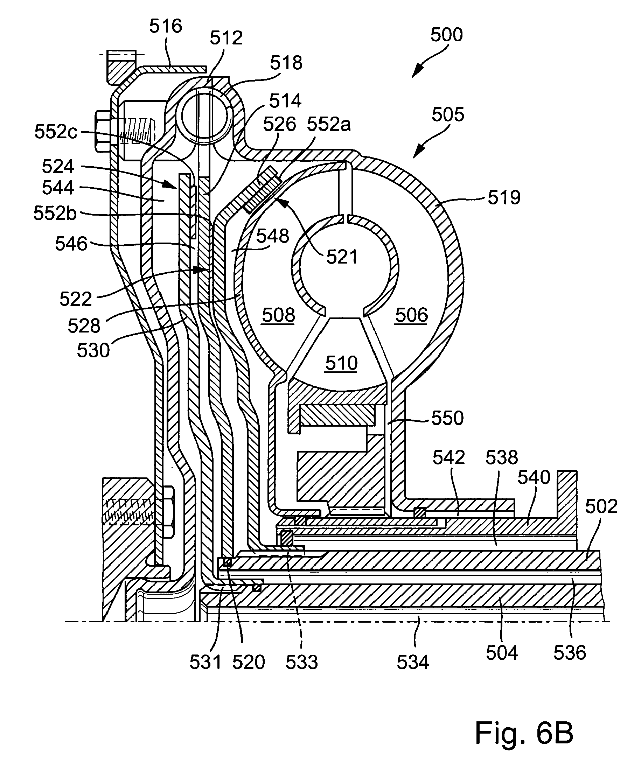

Fig. 6B zeigt die Kupplungsanordnung 500 der vorliegenden Erfindung von Fig. 5, bei der die Turbinenkupplung 521 der Turbine 508 ausgekuppelt und die Kupplung 522 eingekuppelt ist. Um die Reibungskupplung 522 einzukuppeln, während die Turbinenkupplung 521 noch eingekuppelt ist, wird das Drehmoment der Reibungskupplung 522 so lange langsam erhöht, bis diese am Ende des Anfahrvorgangs vollständig eingekuppelt ist. Unter "langsam erhöhen" ist zu verstehen, dass das Drehmoment in der Reibungskupplung 522 über einen Zeitraum von mindestens 1,5 s erhöht wird, bis die Reibungskupplung 522 die Drehzahl der Turbine erreicht hat. Zu diesem Zeitpunkt ist die Turbinenkupplung 521 ausgekuppelt. Genauer gesagt, zum Einkuppeln der Reibungskupplung 522 bleibt das Ventil der Leitung 534 geschlossen und somit der Druck in der Leitung 534 hoch. Die Ventile der Leitungen 538 und 542 werden geöffnet, sodass das Öl in die Wanne abfließt und der Druck in den Leitungen 538 und 542 und den entsprechenden Flüssigkeitskammern 548 bzw. 550 niedrig ist. Der Kolben 526 bewegt sich in axialer Richtung von der Turbine 508 weg, und der Kolben 526 und die Flanschscheibe 514 greifen ineinander. Wenn die Kupplung 522 eingekuppelt ist, wird somit das Drehmoment zur ungeraden Getriebeantriebswelle 502 übertragen. Die Synchronisierung beim Schalten zwischen einem (nicht gezeigten) ersten Gang auf der ungeraden Getriebeantriebswelle 502 und einem (nicht gezeigten) zweiten Gang auf der geraden Getriebeantriebswelle 504 wird durch die Reibungskupplungen 522 bzw. 524 in der Weise hergestellt, dass das Schalten dem eines Automatikgetriebes vergleichbar ist. Bei einigen Aspekten wird die Turbinenkupplung 521 mittels eines am Turbinengehäuse 528 angebrachten zentrifugal gesteuerten (nicht gezeigten) Ventils eingekuppelt. Bei einigen Aspekten wird die Turbinenkupplung 521 mittels eines mit der Leitung 538 verbundenen (nicht gezeigten) Ventils eingekuppelt.

Zum Einkuppeln der Reibungskupplung 524 und zum Auskuppeln der Kupplung 522 werden die Ventile für die Leitung 538 und die Leitung 542 geschlossen, sodass in den entsprechenden Flüssigkeitskammern 548 bzw. 550 ein hoher Druck herrscht. Das Ventil der Leitung 536 ist offen, sodass die Flüssigkeit in die (nicht gezeigte) Getriebewanne abfließt und der Druck in der Leitung 548 niedrig ist. Dadurch wird die Kolbenscheibe 530 in axialer Richtung zur Flanschscheibe 514 verschoben, sodass die Kolbenscheibe 530 und die Flanschscheibe 514 ineinander greifen. Wenn die Kupplung 524 eingekuppelt ist, wird somit das Drehmoment zur geraden Getriebeantriebswelle 504 übertragen.

Zum erneuten Einkuppeln der Kupplung 522 und zum Auskuppeln der Kupplung 524 werden die Ventile der Leitungen 536 und 542 geschlossen, sodass der Druck in den Leitungen 536 und 542 sowie den entsprechenden Flüssigkeitskammern 546 und 550 hoch ist. Das Ventil der Leitung 538 ist offen, sodass die Flüssigkeit in die Getriebewanne abfließt und der Druck in der Leitung 538 und der Flüssigkeitskammer 548 niedrig ist.

Dem Fachmann ist auch klar, dass in der Kraftübertragung auf jede Antriebswelle andere als die Reibungskupplungen, zum Beispiel Mehrscheibenkupplungen und Kupplungen mit geschlossenem Kolben, und separate Dämpfer verwendet werden können und diese Modifikationen dem Geist der beanspruchten Erfindung entsprechen und innerhalb deren Geltungsbereichs liegen. Desgleichen ist klar, dass in den Deckel des Drehmomentwandlers ein Zweimassen-Schwungraddämpfer eingebaut werden kann. Ferner können übliche biegsame Scheiben verwendet und so die Fertigungskosten verringert werden.

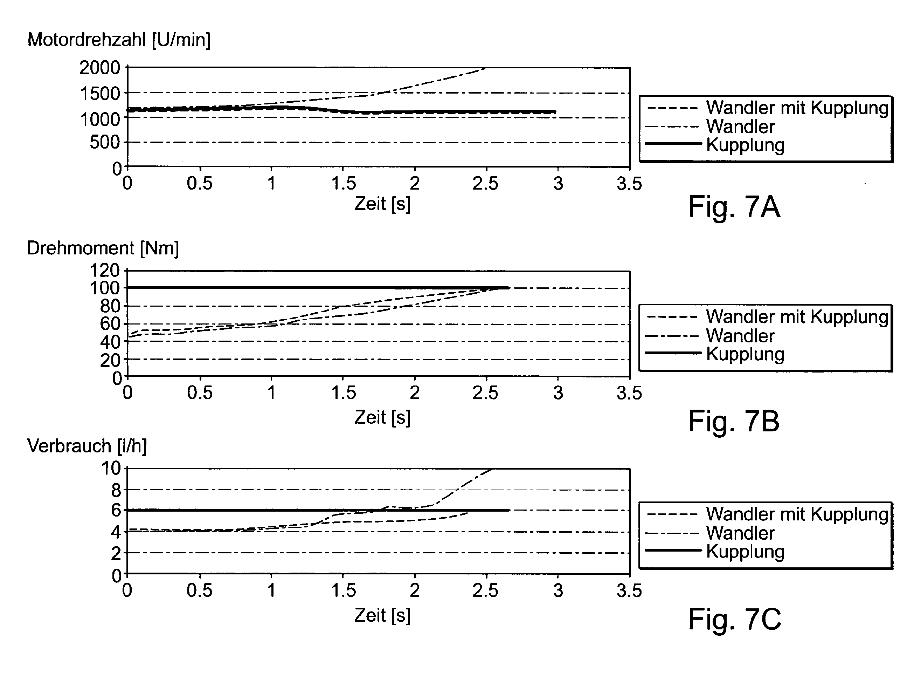

Fig. 7A zeigt eine Motordrehzahlkurve beim Anfahren eines Fahrzeugs mit einer Kupplungsanordnung 500 der vorliegenden Erfindung. Während der ersten drei Sekunden des Anfahrens wird bei der Kupplungsanordnung 500 eine niedrigere Motordrehzahl benötigt als bei einer Kraftübertragung, die mit einem Drehmomentwandler ohne eine Kupplungsanordnung gekuppelt ist. Die Kupplungsanordnung 500 benötigt etwa die gleiche Motordrehzahl wie eine Kraftübertragung, die mit einem einfachen Kupplungssystem gekuppelt ist. Zum Beispiel beträgt die Motordrehzahl bei der Kupplungsanordnung 500 und einem einfachem Kupplungssystem nach zwei Sekunden etwa 1300 min⁻¹, während ein Drehmomentwandler ohne eine Kupplungsanordnung eine Motordrehzahl von etwa 1600 min⁻¹ benötigt.

Fig. 7B zeigt eine Drehmomentkurve beim Anfahren eines Fahrzeugs mit einer Kupplungsanordnung 500 der vorliegenden Erfindung. Obwohl im Gegensatz zu einer Kraftübertragung mit einem Drehmomentwandler ohne Kupplungsanordnung bei der Kupplungsanordnung 500 eine niedrigere Motordrehzahl benötigt wird, steht ein größeres Drehmoment zur Verfügung als bei einem Drehmomentwandler ohne Kupplungsanordnung. Zum Beispiel liefert die Kupplungsanordnung 500 nach zwei Sekunden ein Drehmoment von etwa 90 Nm, während ein Drehmomentwandler ohne Kupplungsanordnung nur ein Drehmoment von etwa 80 Nm liefert. Da im Gegensatz zu Reibungsanfahrsystemen, einschließlich Nasskupplungen, bei Verwendung eines Drehmomentwandlers mit einer Kupplungsanordnung für ein Schaltgetriebe mit zwei Eingängen das Drehmoment vervielfacht wird, gibt es für das Anfahren am Berg keine Grenzen. Es ist klar, dass die Anfahrkennwerte, zum Beispiel die Verringerung der benötigten Motordrehzahl und die Zunahme des durch die Kupplungsanordnung 500 bereitgestellten Drehmoments bei allen Temperaturen und Bedingungen reproduzierbar sind.

Fig. 7C ist ein Kraftstoffverbrauchsdiagramm beim Anfahren eines Fahrzeugs in Verbindung mit einer Kupplungsanordnung 500 der vorliegenden Erfindung. Das Kraftstoffverbrauchsdiagramm zeigt eine Kurve für das Anfahren mit der Kupplungsanordnung 500 im Vergleich zum Anfahren mit einer einfachen Kupplung und zum Anfahren mit einem Drehmomentwandler ohne Kupplungsanordnung. Die Kurven zeigen, dass der Wirkungsgrad der Kupplungsanordnung 500 beim Anfahren deutlich höher ist als beim Anfahren mit einer einfachen Kupplung und als beim Anfahren mit einem Drehmomentwandler ohne Kupplungsanordnung. Dies führt im standardisierten Stadtfahrbetrieb nach EPA zur einer gesamten Kraftstoffeinsparung um etwa 1 %. Es ist klar, dass die Kupplungsanordnung 500 vollständig vom Motor getrennt werden kann, wenn sich das Fahrzeug im Leerlauf befindet (Leerlauf-Auskupplungsmodus), um so den beim Gebrauch von Drehmomentwandlern normalerweise auftretenden Leistungsverlust zu vermeiden.

Ein weiterer Vorteil bei Verwendung einer Kupplungsanordnung 500 für ein Schaltgetriebe mit zwei Eingängen, bei der sich ein Kupplungssystem im Innern des Drehmomentwandlergehäuses befindet, besteht darin, dass der Umfang des Drehmomentwandler im Vergleich zu einem normalen Drehmomentwandler verringert werden kann, da die Reibungskupplung 522 in jedem Fall das höchstzulässige Drehmoment vergrößert. Ferner werden die Masse und das Trägheitsmoment verringert. Der Deckel des Drehmomentwandlers liefert das Hauptträgheitsmoment, sodass kein Nass- oder Trockenvolumen benötigt wird. Ferner dient der Stahl der Wärmeaufnahme, und das Material wird bestmöglich ausgenutzt. Desgleichen sind die Kupplungen stark verkleinert, da der Drehmomentwandler die Prozesse des Anfahrens und des Abwürgens bewältigt, welche die höchsten Anforderungen an die Größe der Kupplung stellen.

Die Aufgaben der Erfindung werden somit wirksam gelöst, obwohl ein Fachmann leicht Modifikationen und Änderungen an der Erfindung vornehmen kann, die im Geltungsbereich der Ansprüche liegen.

## Patentansprüche

1. Vorrichtung zur Drehmomentübertragung, die Folgendes umfasst:
einen Drehmomentwandler;
eine erste Antriebswelle für ein Schaltgetriebe mit zwei Eingängen; und
ein Mittel zum Kuppeln des Drehmomentwandlers mit der ersten Antriebswelle.

2. Vorrichtung nach Anspruch 19, wobei die Vorrichtung ferner eine Turbine und einen ersten Kolben umfasst, die mit der ersten Antriebswelle verbunden sind, und das Mittel zum Kuppeln ferner eine erste Kupplung umfasst, die funktionell so angeordnet ist, dass sie den ersten Kolben mit der Turbine kuppelt.

3. Vorrichtung nach Anspruch 20, wobei die Vorrichtung ein Eingangsdrehmoment aufnimmt und ferner eine zweite Kupplung und eine Flanschscheibe umfasst, die mit dem Eingangsdrehmoment verbunden sind, wobei die zweite Kupplung funktionell so angeordnet ist, dass sie die Flanschscheibe mit dem ersten Kolben kuppelt.

4. Vorrichtung nach Anspruch 21, wobei die Vorrichtung ferner einen zweiten Kolben, eine zweite Antriebswelle und eine dritte Kupplung umfasst, der zweite Kolben mit der zweiten Antriebswelle verbunden und die dritte Kupplung funktionell so angeordnet ist, dass sie den zweiten Kolben mit der Flanschscheibe kuppelt.

5. Vorrichtung nach Anspruch 21, wobei die Vorrichtung ferner ein Schwingungsdämpfungsmittel umfasst und die Flanschscheibe mit dem Schwingungsdämpfungsmittel verbunden ist.

6. Vorrichtung nach Anspruch 21, bei welcher der Drehmomentwandler ferner eine mit einer ersten Drehzahl rotierende Pumpe umfasst, die Turbine mit einer zweiten Drehzahl rotiert und die erste Kupplung so angeordnet ist, dass sie als Reaktion auf ein Verhältnis zwischen der ersten und der zweiten Drehzahl auskuppelt und die zweite Kupplung so angeordnet ist, dass sie als Reaktion auf das Drehzahlverhältnis einkuppelt.

7. Vorrichtung nach Anspruch 21, wobei die Vorrichtung ferner mindestens eine Flüssigkeitskammer und mindestens ein Ventil umfasst, das funktionell so angeordnet ist, dass es den jeweiligen Flüssigkeitsdruck in der mindestens einen Kammer steuert, wobei das mindestens eine Ventil ein zentrifugal gesteuertes Ventil oder ein Leitungsverbindungsventil ist und die erste Kupplung als Reaktion auf den jeweiligen Flüssigkeitsdruck in Aktion tritt.

8. Verfahren zur Erhöhung des Drehmoments für ein Schaltgetriebesystem mit zwei Eingängen, wobei das Verfahren Folgendes umfasst:
Erzeugen eines Drehmoments in einem im System angeordneten Drehmomentwandler; und
Übertragen des Drehmoments an eine erste Antriebswelle eines Schaltgetriebes des Systems mit zwei Eingängen.

9. Verfahren nach Anspruch 26, wobei das System ferner eine erste Kupplung umfasst und das Übertragen des Drehmoments ferner das Kuppeln des Drehmomentwandlers mit der ersten Antriebswelle mittels der ersten Kupplung umfasst.

10. Vorrichtung nach Anspruch 27, wobei der Drehmomentwandler ferner eine Pumpe und eine Turbine umfasst, die mit einer ersten bzw. zweiten Drehzahl rotieren; und
das Verfahren ferner Folgendes umfasst:
Auskuppeln des Drehmomentwandlers und der ersten Antriebswelle mittels der ersten Kupplung als Reaktion auf ein Verhältnis zwischen der ersten und der zweiten Drehzahl.

11. Verfahren nach Anspruch 26, wobei das System ferner eine zweite Kupplung umfasst und
das Verfahren ferner Folgendes umfasst:
Verbinden des System mit dem Eingangsdrehmoment; und
Übertragen des Eingangsdrehmoments mittels der zweiten Kupplung an die erste Antriebswelle.

12. Verfahren nach Anspruch 29, wobei das System ferner ein Schwingungsdämpfungsmittel umfasst und das Übertragen des Eingangsdrehmoments ferner das Übertragen des Eingangsdrehmoments über das Schwingungsdämpfungsmittel umfasst.
